(19) Europäisches Patentamt
European Patent Office
Office européen des brevets

(11) **EP 3 771 851 B1**

(12) **EUROPEAN PATENT SPECIFICATION**

(45) Date of publication and mention of the grant of the patent:
**19.07.2023 Bulletin 2023/29**

(21) Application number: **20187871.7**

(22) Date of filing: **27.07.2020**

(51) International Patent Classification (IPC):
**F16K 31/53** (2006.01)　　**F16K 31/60** (2006.01)
**F16K 35/02** (2006.01)　　**F16K 37/00** (2006.01)
**G05G 1/015** (2008.04)　　**G05G 1/08** (2006.01)

(52) Cooperative Patent Classification (CPC):
**F16K 31/60; F16K 31/53; F16K 35/027;**
**F16K 37/0016; F16K 37/0058; G05G 1/082;**
G05G 1/015

(54) **EPICYCLIC HANDWHEEL FOR OPERATING A VALVE**

EPIZYKLISCHES HANDRAD ZUM BETÄTIGEN EINES VENTILS

VOLANT ÉPICYCLOÏDAL POUR FAIRE FONCTIONNER UNE VANNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2019 IT 201900013824**

(43) Date of publication of application:
**03.02.2021 Bulletin 2021/05**

(73) Proprietor: **WATTS INDUSTRIES ITALIA S.r.l.**
**38121 Frazione Gardolo (TN) (IT)**

(72) Inventors:
• **MORUZZI, Paolo**
**38121 Frazione Gardolo - Trento (IT)**
• **CUCCINIELLO, Alfredo Marco**
**38121 Frazione Gardolo - Trento (IT)**
• **FONTANA, Sergio**
**38121 Frazione Gardolo - Trento (IT)**
• **GRASSI, Pietro**
**38121 Frazione Gardolo - Trento (IT)**
• **GUNSH, Fabio**
**38121 Frazione Gardolo - Trento (IT)**

(74) Representative: **Stucovitz, Alessandro et al**
**Dott. Ing. Prof. Alfredo Raimondi S.r.l.**
**Piazzale Luigi Cadorna, 15**
**20123 Milano (IT)**

(56) References cited:
WO-A1-2019/143356　　CN-U- 205 956 528
CN-Y- 2 622 516　　DE-A1- 3 902 731
DE-C1- 19 847 039　　SE-B- 420 128
US-A- 5 037 066

EP 3 771 851 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to an epicyclically operated handwheel for operating a valve and a valve unit comprising such a handwheel.

The handwheel according to the invention is in particular applicable to quarter-turn valves, for example butterfly valves, but also to ball valves and in general all those valves for which a high operating torque is needed in order to open or close them. It is known, in the technical sector of valves, for example quarter-turn valves, that the same valves have a valve body which defines a passage for a fluid, and an element for closing the fluid passage, which may be rotated about its axis by means of an actuating shaft, so as to cause opening/closing of the fluid passage. With specific reference to quarter-turn valves, the closing element, in particular a disc, is configured so as to be arranged with any orientation ranging between zero degrees, corresponding to a closed condition of the fluid passage, and 90 degrees, corresponding to a fully open condition of the fluid passage. A particular example of the quarter-turn valve consists of so-called butterfly valves.

The opening or closing of a valve may be performed and adjusted by suitable means which may comprise a handwheel and which, although performing their function, have some limitations.

A first problem associated with the known adjustment means for valves of the type described is that they are unable to provide precise and stable adjustment of the valve opening movement, it moreover not being possible to prevent accidental undesirable rotation of the levers or adjustment handwheels.

A further problem is linked to the impossibility of measuring a number of significant physical parameters for setting and monitoring the fluid-mechanical installation controlled by means of the valve. In the context of the valves described above, the main significant physical quantities are the flowrate, the pressure and the temperature of the fluid entering and/or exiting the valve.

Although the measurement of the pressure and/or the temperature may be performed relatively easily, the same is not true for measurement of the flowrate. It is in fact difficult to obtain a system for measuring the flowrate which has a reasonable cost and is able to satisfy the market requirements. It is therefore desirable to provide a device for adjusting the opening of a valve, in particular a quarter-turn valve, which allows one or more operating parameters of the valve to be determined and adjusted in a precise and easy manner.

In connection with this problem it is particularly desirable to be able to adjust and determine the opening angle of the valve and/or one or more fluid-dynamic parameters which allow the flowrate of the fluid through the valve to be calculated.

An example of such a parameter is the hydraulic conductivity of the valve, also known as the flow factor or Kv value (flow coefficient or Cv in the USA), which is strictly correlated to the type, the size and the opening angle of the closing element of the value and allows the flowrate to be rapidly derived by means of the known formula $Q = Kv\sqrt{\Delta p}$ where Δp is the pressure drop across the valve and Q is the flowrate.

The conductivity Kv is defined as the flowrate in cubic metres of water per hour at the temperature of 16°C with a pressure drop of 1 bar across the valve, in the direction of flow of the fluid.

The technical problem which is posed, therefore, is that of providing a device for adjusting a valve, in particular a quarter-turn valve, which is able to solve or limit one or more of the said problems of the prior art. DE3902731A1 discloses a prior art valve according to the preamble of claim 1.

In connection with this problem it is also required that this device should have small dimensions, be easy and inexpensive to produce and assemble and be able to be easily installed at any user location using normal standardized connection means.

These results are obtained according to the present invention by an epicyclic handwheel according to Claim 1 and by a valve unit according to Claim 22.

According to a first aspect the invention therefore relates to an epicyclic handwheel for a valve, in particular a quarter-turn valve, comprising: a control knob which can be rotationally operated about a longitudinal axis; and an epicyclic mechanism for transmission of a rotational movement, comprising:

-- a sun gear extending along the longitudinal axis and rotationally integral with the control knob;
-- a planet carrier configured to be rotationally locked to a shaft of the valve;
-- a crown wheel configured to be rotationally locked to a body of the valve and provided with an internal annular toothing coaxial with the sun gear; and
-- a plurality of planet gears mounted on the planet carrier and arranged to rotate about a respective axis parallel to the axis of the sun gear and mesh with the said sun gear and with the internal annular toothing of the crown wheel;

so that by rotationally operating the control knob the rotational movement of the sun gear is transmitted to the planet carrier and therefore to the valve shaft.

This configuration results in numerous advantages including in particular the transmission of high torques from the control knob to an actuating shaft during opening/closing of the valve, while keeping the axial extension of the handwheel extremely compact.

According to a preferred embodiment, the planet carrier comprises a support, which has a plurality of pins, which are preferably hollow, each extending parallel to the longitudinal axis towards the control knob and designed to support and act as a rotational pivot for a respective planet gear coaxially mounted on the respective pin. The handwheel preferably comprises at least two, preferably three planet gears.

The support may comprise a coaxial sleeve extending longitudinally from a rear side thereof, preferably configured for engagement with the valve shaft and/or having dimensions suitable for coaxial insertion inside a corresponding hole of the crown wheel.

The plant carrier may include a cover axially arranged between the planet gears and the control knob so as to limit, in particular lock, the longitudinal position of each planet gear, leaving it free to rotate. The cover preferably comprises an annular disc arranged between the support and the control knob so as to limit, in particular lock, the longitudinal axial position of the planet gears, leaving them free to rotate on the respective pin.

According to a preferred embodiment, the support and/or the cover, in particular the covering disc, has/have a plurality of projecting shoulders extending in the longitudinal direction, preferably with a substantially triangular or trapezoidal form, which give the handwheel a better structural rigidity and durability.

According to a further preferred aspect, the cover, in particular the covering disc, has an outer annular edge formed as an asymmetrical structure, with a predefined circumferential extension, suitable for cooperating with a corresponding inner seat of the crown wheel, the asymmetrical edge structure and the seat being dimensioned and configured to limit the rotation of the planet carrier with respect to the crown wheel within a certain predefined range of rotation, thus avoiding in particular erroneous settings of the degree of opening of a valve.

According to the invention, the epicyclic handwheel comprises a mechanism for reversibly locking the rotation of the control knob, comprising first locking means rotationally integral with the control knob and cooperating with second complementary locking means arranged on the crown wheel of the epicyclic mechanism. The control knob is movable between at least a first operating position, in which the first locking means engage the second complementary locking means so as to lock rotation of the control knob about the longitudinal axis, and at least one second operating position, in which the first locking means are disengaged from the second locking means, allowing rotation of the control knob. According to this solution, with a compact structure undesirable or accidental operation of the control knob is avoided, thereby preventing the valve from being accidentally opened or closed.

The first locking means comprise an internal annular toothing of an annular body integral with the control knob and the second locking means comprise a complementary annular toothing on an outer surface of the crown wheel. The control knob in particular may be axially movable in the longitudinal direction with respect to the crown wheel between said first locked operating position and said at least one second operating position. Preferably, one or more thrust springs are arranged between the crown wheel and the control knob so as to keep the control knob at a predefined distance from the crown wheel corresponding to the first operating position.

According to a further preferred aspect, the handwheel comprises a flat annular plate arranged between the planet gears and the control knob and rotationally integral with the planet carrier.

The plate may also be partially freely to move in the axial direction with respect to the support against the thrusting action of one or more of said springs, so that the plate provides a reaction surface for the springs, which push the plate towards the control knob in the longitudinal direction. According to anther particularly advantageous aspect, the annular plate has on its front surface, adjacent to the inner surface of the control knob, an indication of the value of at least one operating parameter of the valve; the control knob has in turn at least one window on its front surface which allows the viewing of the operating parameter indicated on the annular plate. The indication of the parameter allows viewing, on the front surface of the control knob, of the value of the parameter set by means of rotation of said control knob.

The annular plate may in particular be rotationally integral with a part of the planet carrier, preferably the support, which during use is rotationally integral with a shaft of the valve, the at least one parameter being in particular a parameter dependent on the degree of rotation of a closing element operated by the valve shaft.

Since the degree of opening or closing of the valve directly depends on the degree of rotation of the actuating shaft and therefore the rotation of the planet carrier, by means of a simple structure a precise and clear indication of one or more operating parameters of the valve is obtained.

Preferably, the indication comprises at least one graduated scale distributed over a suitable angular extension of the annular plate and comprising a plurality of values of the operating parameter. The at least one operating parameter preferably comprises an opening angle of the valve and/or a hydraulic conductivity of the valve. The indication may also comprise a plurality of graduated scales arranged concentric or in diametrically opposite positions on the annular plate; and/or a plurality of graduated scales for indicating a same parameter, in particular the hydraulic conductivity, which varies depending on the type and/or the size of the valve.

The at least one window may, depending on the different configurations, have dimensions such as to allow the simultaneous viewing of a first and at least one further operating parameter. In addition to or as an alternative at least one further window may be provided for allowing viewing of at least one further parameter. A partial covering element of a window of the control knob, which may be stably and reversibly connected to the said control knob, may be preferably used to allow the viewing only of indications relating to one or more parameters of interest or relating to the specific valve.

The invention relates furthermore to a method for the production of a handwheel according to Claim 21.

Further details may be obtained from the following description of non-limiting examples of embodiment of the subject of the present invention, provided with reference to the accompanying drawings, in which:

Figure 1: shows an exploded perspective view, from below, of a first example of embodiment of a handwheel according to the invention;

Figure 2: shows an exploded perspective view, from above, of the handwheel according to Fig. 1;

Figure 3: shows a front view of the handwheel according to Fig. 1 in the assembled condition;

Figure 4: shows a perspective view, from the rear, of the handwheel according to Fig. 1 in the assembled condition;

Figure 5: shows a perspective view of the planet carrier and the planet gears of a handwheel according to Fig. 1 in the assembled condition;

Figure 6: shows a plan view, from the rear, of the handwheel according to

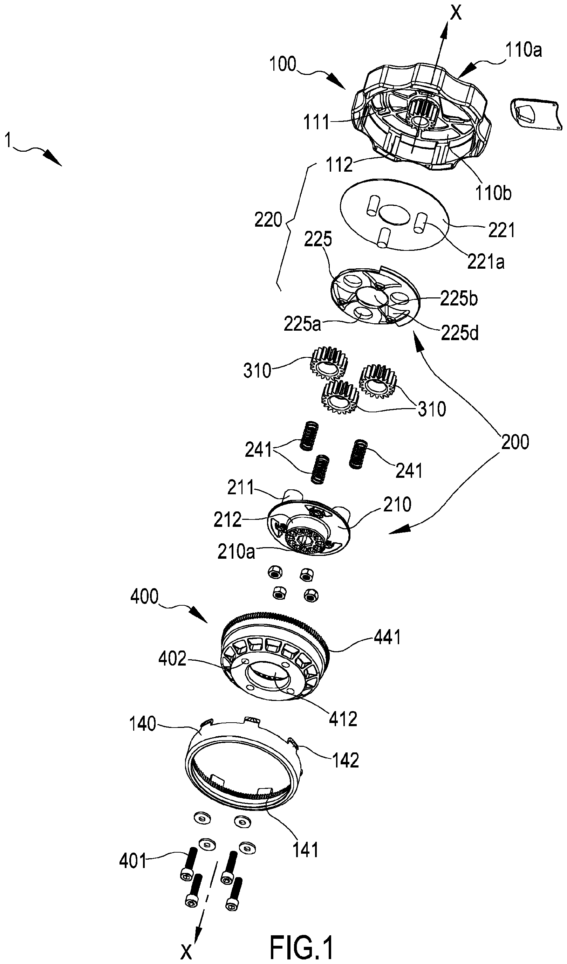

Fig. 1 in the assembled condition;

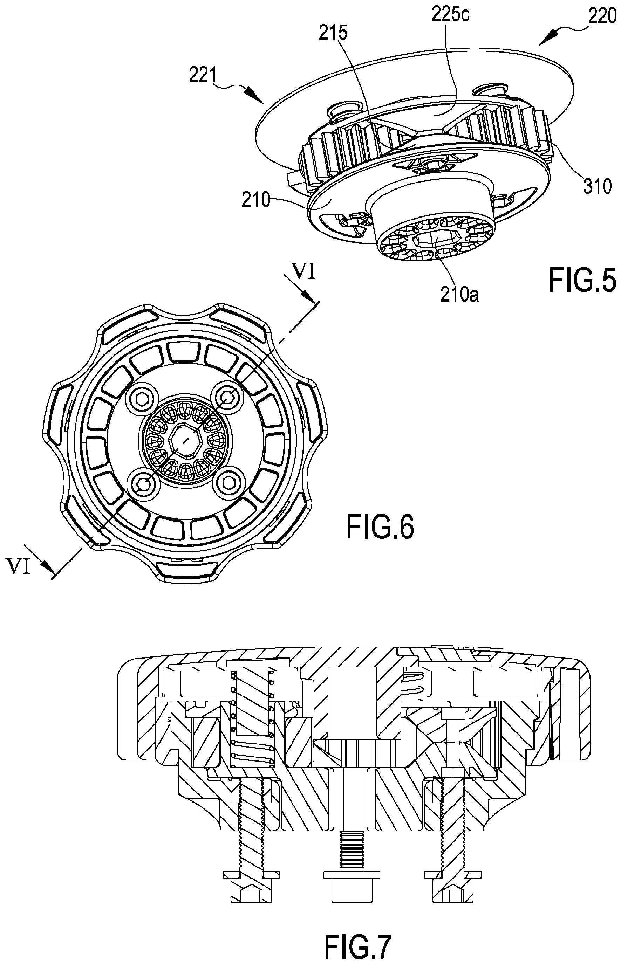

Figure 7: shows a view longitudinally sectioned along the plane indicated by VII-VII in Fig. 6;

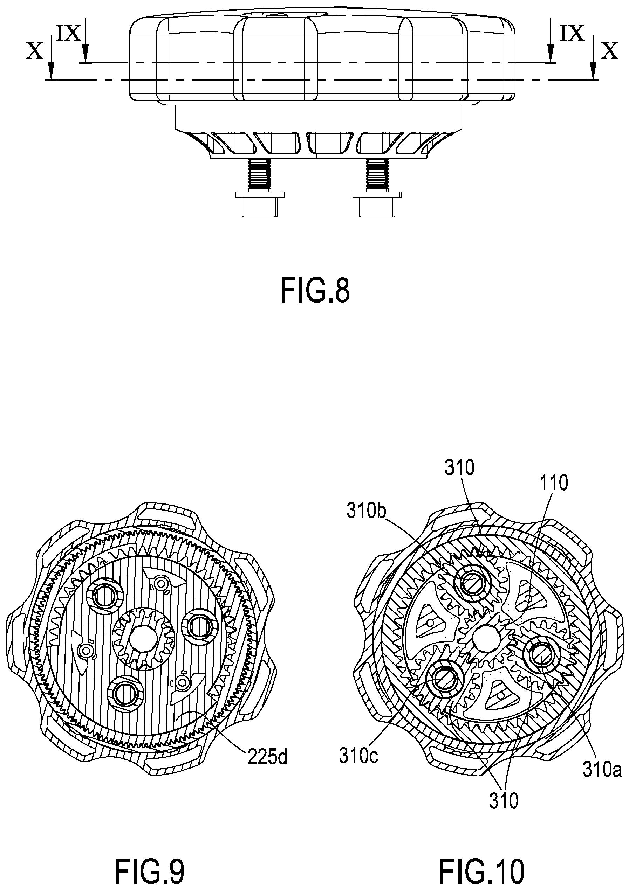

Figure 8: shows a side view of the handwheel according to Fig. 1 in the assembled condition;

Figure 9: shows a view cross-sectioned along the radial plane IX-IX of Fig. 8;

Figure 10: shows a view cross-sectioned along the radial plane X-X of Fig. 9;

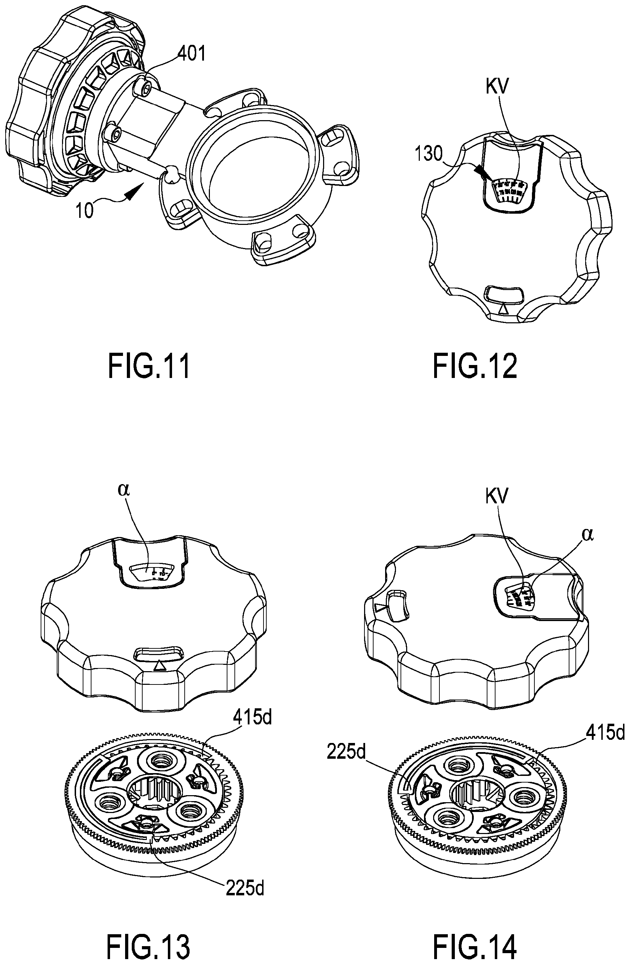

Figure 11: shows an exploded perspective view, from below, of a first example of embodiment of a handwheel according to the invention fixed to the valve body of a butterfly valve;

Figure 12: shows a perspective view, from the front, of a second example of embodiment of the handwheel according to the present invention;

Figures 13 and 14: show a partially exploded perspective view of the handwheel according to Fig.12 in a respective different adjustment position;

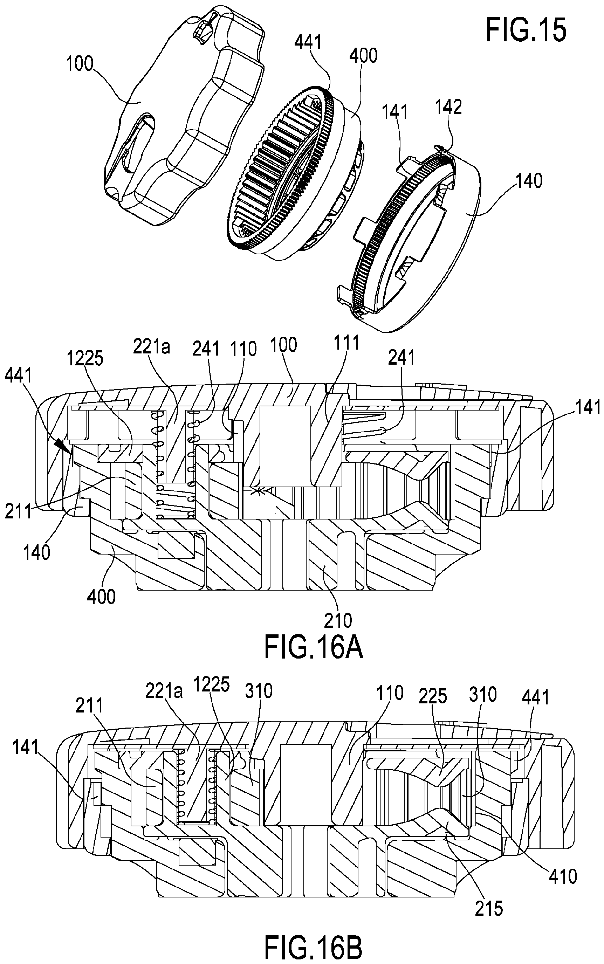

Figure 15: shows an exploded perspective view of some parts of a mechanism for reversibly locking the handwheel according to Fig. 1;

Figure 16A: shows a longitudinally sectioned view of the handwheel according to Fig. 1, with the locking mechanism in the locked operating position; and

Figure 16B: shows a longitudinally sectioned view of the handwheel according to Fig. 1, with the locking mechanism in the unlocked operating position.

With reference to Fig. 1, solely for the sake of easier description and without a limiting meaning, the following are assumed: an axial longitudinal direction X-X, parallel to the longitudinal axis x of rotation of a handwheel according to the invention, and a transverse/radial direction Y-Y perpendicular to said longitudinal direction and parallel to a diameter of the handwheel according to the present invention, as well as a front part corresponding to the part of the control knob of the handwheel facing the user during use, and a rear part, opposite to the front part in the axial longitudinal direction X-X and facing, during use, the valve body of a valve operated by means of the handwheel according to the invention.

The handwheel according to the present invention is in general able to control the opening or closing of a valve comprising: a valve body, which is usually fixed and defines a passage for the flow of a fluid; and an element able to be rotationally operated by means of a valve shaft so as to cause a certain degree of opening or closing of the fluid passage.

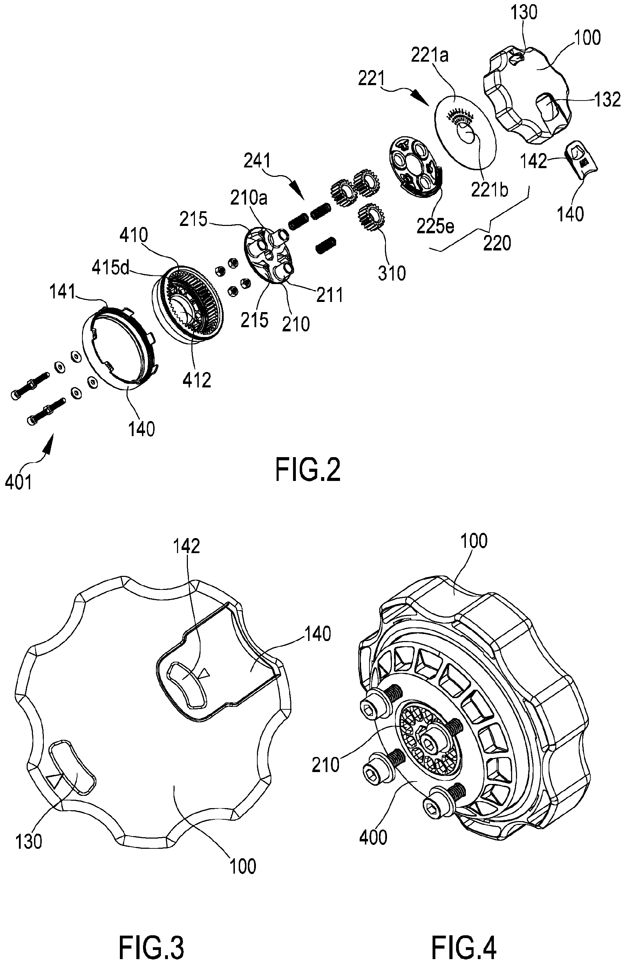

With reference to Figs. 1 and 2, a handwheel 1 according to the invention comprises a control knob 100 able to be rotationally operated about a longitudinal axis X-X so as to control the opening or closing of a valve. The control knob 100 has a front surface 110a and a rear or inner surface 110b, opposite to the front surface in the longitudinal direction X-X.

The handwheel 1 further comprises an epicyclic mechanism arranged and configured to transmit the rotational movement of the control knob 100 to a shaft for actuating a valve.

The epicyclic mechanism comprises a sun gear 110, coaxial with the longitudinal axis X-X and integral with the inner surface 110b of the control knob 100.

The sun gear 110 has an outer circumferential surface provided with suitable toothing 11 and extending in the longitudinal direction over a length suitable for engagement with planet gears described in greater detail below. Preferably, the sun gear 110 is formed as one piece with the control knob 100.

The epicyclic mechanism further comprises generally a planet carrier 200 configured to be rotationally locked to a shaft for opening/closing the valve. For this purpose, the planet carrier 200 has preferably a hole 210a coaxial with the longitudinal axis X-X which has a size and is formed so as to allow the stable connection with the shaft (not shown) of the valve, in particular by means of friction engagement, although other types of connection known in the art are possible for rotationally fixing the shaft to the planet carrier 200. The planet carrier 200 is designed to carry a plurality of planet gears 300, in particular at least two and preferably three planet gears 310, designed to rotate with respect to the said planet carrier about a respective axis 310a, 310b, 310c (Fig. 10) parallel, but axially offset with respect to the longitudinal axis X-X of the sun gear 110.

Each planet gear 310 is arranged on the planet carrier 200 so as to mesh with the outer toothing of the sun gear 110, such that the rotation of the sun gear 110 rotationally operates each of the planet gears 310.

A coaxial crown wheel 400 is arranged on the outside of the planet carrier 200 and is configured to be rotationally locked to a body of the valve; in particular, the crown wheel 400 may be fixed to the valve body 10 (Fig. 11) by means of suitable fixing means such as fixing screws 401 inserted inside corresponding holes 402 of a rear annular surface of the crown wheel 400, arranged on the axially opposite side of the planet carrier 200 to the control knob 100.

The crown wheel 400 is provided with an inner annular toothing 410 coaxial with the sun gear 110.

Once the handwheel 1 is assembled, the planet carrier 200 and the planet gears 310 are arranged inside the crown wheel 400. The planet gears 310 each mesh with the inner annular toothing 410 which therefore acts as a fixed element of the epicyclic mechanism for transmission of the movement. The general configuration of the epicyclic mechanism described above allows high torques to be transmitted from the control knob to the valve shaft, while keeping the axial extension of the handwheel extremely compact; it is for example possible to obtain a transmission ratio between gear and shaft of 4.4:1 with a longitudinal height of the handwheel 1 equal to only 45 mm.

With reference still to Figs. 1-2 and 5, a preferred embodiment of the planet carrier 200 comprises a support 210 which is situated close, in the longitudinal direction X-X, to the crown wheel 400 and which has a plurality of pins 211, which are preferably hollow, each extending parallel to the longitudinal axis towards the control knob 100 and designed to support and act as a rotational pivot for a respective planet gear 310 which, when the handwheel is assembled, is coaxially mounted on the respective pin 211. The support 210 further comprises preferably a coaxial sleeve 212 extending longitudinally from the rear face of the support 210 and provided with a hole 210a for engagement with the valve shaft. Advantageously, the sleeve 212 may have dimensions suitable for coaxial insertion inside a corresponding hole 412 of the crown wheel 400, thus favouring the longitudinal compactness of the handwheel and the correct relative positioning of planet gears and crown wheel 400.

According to a further preferred aspect, the support 210 may have a plurality of projecting shoulders 215 extending in the longitudinal direction from a front face of the support, preferably with a substantially triangular or trapezoidal form. The shoulders 215 improve the torsional strength of the epicyclic mechanism.

The planet carrier 200 may further comprise (Fig. 1) a cover 220 which limits and in particular locks the longitudinal/axial position of each planet gear 310 and is arranged between the support 210 and the control knob 110 and is connected to the support 210.

According to a preferred example of embodiment, the cover 220 comprises or is connected to annular plate 221 provided with a plurality of pins 221a projecting from its rear surface and each designed for coaxial insertion into a respective pin 211 of the support 210 which forms the axis of rotation for the respective planet gear 310. The annular plate 221 further comprises a hole 221b coaxial with the sun gear 110 and with a size suitable for allowing the passage of the said sun gear.

According to a further preferred aspect, the cover 220 may comprise an annular disc 225 of the cover 220 arranged between the support 210 and the annular plate 221. The disc 225 may be in particular configured to limit or lock, once the handwheel is assembled, the axial position of the planet gears 310 which remain, however, free to rotate on the respective pin 211.

The disc 225 may for example comprise a coaxial central hole 225b and a plurality of through-holes 225a, each coaxial with a respective pin 211 of the support 210 and, if present, with the corresponding pin 221a of the annular plate 221. As an alternative to the holes 225a, sleeves 1225a may be provided (see the variation of embodiment of the second disc 1225 shown in Figs. 16a,16b), these being coaxial with the pins 211,221a configured to engage, for example by means of snap-engagement, inside a respective pin 211 and allow the axial insertion, inside them, of a respective pin 221a of the annular plate 221, locking the axial position of the planet gears 310, but preferably leaving the plate 221 free to move over a certain axial distance. The annular disc 225 preferably has shoulders 225c projecting in the longitudinal direction from its rear surface and suitable for engagement, when the planet carrier 200 is assembled (Fig. 5), with a corresponding shoulder 215 of the support 210.

Each projecting shoulder 225a will in general have a form, in particular a substantially triangular or trapezoidal form, corresponding to and/or complementing the corresponding shoulder 215 of the support 210.

The preferred configuration with projecting shoulders arranged on the support 210 and on the disc 225 provides the epicyclic mechanism with further improved torsional strength.

According to a further preferred aspect which may be implemented in addition to or independently of the shoulders 225c, the cover, in particular the disc 225, has an outer annular edge formed as an asymmetrical structure 225c, in particular a circle arc, with a predefined radial extension, designed to cooperate with a corresponding seat 415a (Figs. 13,14) formed in the front part of the inner circumferential surface of the crown wheel 400. The asymmetrical edge structure 225d and the seat 415d have dimensions and are configured to limit, when the handwheel is assembled, the rotation of the planet carrier 200 inside the crown wheel 400 within a given predefined rotational range which, for example for quarter-turn valves, may be set to 90°.

As shown in Figure 5, when the planet carrier is assembled together with plate fixed rotationally to the support 210a and cover disc 225 arranged between the support 210 and the annular plate 221, the planet carrier forms a single rotationally integral body, in which each planet gear 310 is supported on a respective pivot 211 about which it is free to rotate with respect to the support 210 and therefore the entire planet carrier 200. Inserting the planet carrier 200 with planet gears 310 coaxially inside the crown wheel 400 and inserting in turn the control knob 100 coaxially on the planet carrier 200 and the crown wheel 400 causes the meshing engagement of the inner toothing 410 of the crown wheel 400 and the toothing of each planet gear 310, which is in turn meshed with the outer toothing of the sun gear 111.

By fixing the shaft of a valve to the planet carrier 200, in particular by means of friction insertion inside the hole 210a of the support 210 and the valve body inside the crown wheel 440, for example by means of fixing screws 401 inserted inside the corresponding holes 402 of the crown wheel, it is possible to rotationally actuate the valve shaft with respect to the fixed body by rotating the control knob 100 and therefore the sun gear 111 which, via the epicyclic mechanism and in particular the planet gears 310 and the crown wheel 400, transmits, with advantageous torque, the rotational movement to the support 210 of the planet carrier 200 and from here to the shaft.

## LOCKING MECHANISM

According to the invention (Fig. 15), the handwheel 1 according to the present invention may comprise a mechanism for reversibly locking the rotation of the control knob 100.

The reversible locking mechanism comprises first locking means 141 rotationally integral with the control knob 100 and configured to cooperate with second locking means 441 arranged on the crown wheel 400 of the epicyclic mechanism so as to lock the rotation of the control knob (with respect to the crown wheel) about the longitudinal axial axis X-X.

According to the preferred example of embodiment shown, the first locking means 141 comprise an inner annular toothing arranged on the inner surface of an annular body 140 integral during use with the control knob 100, and the annular body 140 may for example be formed as one piece with the control knob 100 or preferably be able to be integrally connected to the control knob 100 by means of complementary connecting means 142,112 for example of the snap-engaging type, in the example shown (Figs. 1, 15) consisting of teeth 142 projecting in the longitudinal direction from a front edge of the annular body 140 and configured for being inserted by means of snap-engagement inside corresponding seats 112 formed on the inner circumferential surface of the control knob 100.

In accordance with this configuration of the first locking means, the second locking means may comprise annular teeth 141 arranged on the outer circumferential surface of the crown wheel 400 for meshing with the inner toothing 141 integral with the control knob 100 and consequently locking the relative rotation of the control knob 100 and the crown wheel 400 in a first operating position of the handwheel where the rotation of the control knob about the longitudinal axis is locked.

For all the configurations of the handwheel comprising a reversible locking mechanism the control knob 100 is movable between at least a first locked operating position, in which the first locking means engage with the second locking means so as to prevent rotation of the control knob 100 about the longitudinal axis X-X, and at least one second operating position, in which the first locking means are disengaged from the second locking means, allowing rotation of the control knob about the longitudinal axis X-X relative to the crown wheel 400.

In the preferred embodiments shown in the drawings, this is performed by configuring the handwheel 1 so that it is possible to perform an axial movement, in the longitudinal direction X-X, of the control knob 100 and of the locking means 141 integral therewith with respect to the crown wheel 400. For this purpose, one or more thrust springs 241 are arranged between the crown wheel 400 and the control knob 100 so as to keep the control knob at a predefined distance from the crown wheel 400 corresponding to the first operating position (Fig. 16a) in which the teeth 141 engage with the corresponding outer teeth 441 of the circular crown wheel 400. In particular, each spring 241 may be preferably coaxially inserted inside a respective support pin 211 of the planet carrier 200 so as to push the annular plate 221, the pins 221a of which are coaxially inserted inside the spring 241, towards the control knob 100 in the longitudinal direction X-X.

When the handwheel is assembled, by inserting the pins 221a of the annular plate 221 inside the hole of the respective pin 211 of the support 210, it is possible to connect the annular plate 221 to the support 210, so that in particular the pins of the plate 221 guide internally the springs 241 and the inner base of the plate 221 provides a reaction surface for the said springs 241.

In the preferred embodiment shown, the annular plate 221 is, when the handwheel is assembled, partially free to move in the axial direction X-X with respect to the support 210 against the thrusting action of the spring 241.

As shown in Figs.16a, 16b, by axially pushing the control knob 100 in the longitudinal direction X-X towards the crown wheel 400, the inner surface of the control knob 100 pushes against the annular disc 221, causing the compression of the springs 241 and the displacement of the control knob and the disc 221 towards the support 210 coaxially inserted and axially fixed with respect to the crown wheel 400 (Fig. 16b). The axial displacement of the control knob 100 causes the disengagement of the toothing 141 integral therewith from the outer toothing 441 of the crown wheel 400, allowing the control knob 100 and therefore the sun gear 110 to rotate freely about the longitudinal axis X-X so as to transmit the rotational movement to the planet gears and, via the planet carrier 200, to the valve shaft (not shown).

## INDICATION OF PARAMETERS

With reference still to the preferred embodiments of the handwheel 1 shown in the drawings, a further preferred aspect of the present invention, which may be implemented independently or in combination with the locking mechanism described above, will now be described.

According to this preferred aspect, the handwheel comprises an annular plate, preferably the already described annular plate 221, arranged between the planet gears 310 and the inner surface 110b of the control knob 100. The annular plate 221 is able to rotate integrally with the valve shaft and is for this purpose rotationally integral with a part of the planet carrier 200 rotationally integral with the said shaft, in the examples shown consisting of the planet carrier support 210. The annular plate may, as seen above, form part of or be connected to the cover 220 of the planet carrier; according to a variation of an example of embodiment, the annular plate may also consist simply of a top surface of the cover, in particular of the disc 225. The annular plate may also be independent of the cover 220 which is an optional element, for as long as the annular plate is rotationally locked to the planet carrier 200 and therefore to the valve shaft.

Advantageously, the annular plate 221 has on its front surface 221a, adjacent during use to the inner surface of the control knob 100, an indication of the value of at least one operating parameter of the valve; the at least one parameter being dependent on the rotation of the valve shaft. In particular, the indication may comprise a graduated scale distributed over a suitable angular extension of the annular disc and comprising a plurality of values of the operating parameter.

A first preferred parameter indicated on the annular disc 221 may be the opening angle $\alpha$ of the valve (Fig. 13) which is directly dependent on the degree of rotation of the valve shaft and therefore of the planet carrier 200. The technical operator will know how to position the disc 221 so that the value of 0 degrees corresponds to a closed position of the valve and so that the graduated scale is oriented in accordance with a rotation of the planet carrier 220 in the direction of opening of the valve; this is particularly easy in the preferred embodiments comprising an asymmetrical structure 225d;415d configured to limit, when the handwheel is assembled, the rotation of the planet carrier 200 inside the crown wheel 400.

A further preferred parameter which may be indicated on the disc or annular plate 221 is the hydraulic conductivity of the valve, known also as the flow factor or Kv value (flow coefficient or Cv in the USA), which is strictly correlated to the type, the size and the opening angle of the valve. The further parameter may be indicated on a concentric scale arranged in a position radially on the inside or outside of the first parameter on the disc 221 (Figs. 12, 13, 14) or in a position diametrically opposite to the indication scale of the first parameter $\alpha$.

According to a preferred embodiment, the annular plate 221 may have a plurality of scales for indication of the first or further parameter, in particular the hydraulic conductivity Kv, in the case where this parameter depends for example on the type and/or size of the valve, whereby the handwheel may thus be configured during production so as to indicate the said parameter on different types and sizes of controlled valve.

In order to allow the visibility of one or more operating parameters indicated on the annular disc 221, the control knob 100 has at least one window 130 on its front wall which allows viewing of the current value of the operating parameter indicated on the annular plate 221.

As shown in Figures 12, 13, 14, this window 130 may have dimensions such as to allow simultaneous viewing of the first operating parameter $\alpha$ and at least one further operating parameter Kv. Preferably, as shown in Figs. 2, 3, the control knob 100 may have at least one further window 132 designed to allow viewing of the further parameter Kv. Advantageously, in the case where the further parameter depends for example on the type and/or size of the valve, the handwheel may comprise a removable element 140 for partially covering the further window 132, which may be stably connected to the control knob 100, for example snap-engaged inside a seat formed on its outer front surface, and is configured so as to provide a window 142 which allows viewing of the only one of the multiple scales indicated on the disc 221 for the said further parameter Kv.

Advantageously, the handwheel may be provided as a kit comprising a plurality of covering elements 140 configured with different windows 142, each designed to allow viewing of only one or more of the multiple scales indicated on the disc 221. In this way, the handwheel may be easily adapted during installation to the specific type or size of the valve to which it is applied.

Although described in the context of embodiments in which the control knob has an ergonomic form for manual operation, it is clear to the person skilled in the art that the control knob may consist of any element for receiving a rotational movement for operation of the valve, for example also by means of an automated hydraulic or electric actuator.

It is therefore clear how the handwheel according to the invention is compact and allows easy operation with advantageous transmission of the rotational movement to the valve shaft for performing opening/closing thereof.

The locking mechanism prevents the occurrence of accidental undesirable variations in the degree of opening set by means of the handwheel, making also adjustment particularly stable.

The possibility of allowing the operator to view one or more operating parameters of the valve makes it easier to perform both adjustment of the valve and subsequent control thereof.

The handwheel is moreover easy to produce and may be easily installed on various types of valves and may also be configured to indicate operating parameters which vary from valve to valve.

Although described in connection with a number of embodiments and a number of preferred examples of implementation of the invention, it is understood that the scope of protection of the present patent is defined solely by the claims below.

**Claims**

1.  Epicyclic handwheel for a valve, in particular a quarter-turn valve, comprising:

    - a control knob (100) with an inner surface (110b) and an outer surface (110a) situated opposite each other with respect to a longitudinal axis (X-X), the control knob (100) being rotationally operable about the longitudinal axis;
    - an epicyclic mechanism for transmission of a rotational movement, comprising:

      -- a sun gear (111) extending along the longitudinal axis (X-X) and rotationally integral with the inner surface of the control knob (100);
      -- a planet carrier (200) configured to be made rotationally integral with a shaft of the valve;
      -- a crown wheel (400) configured to be rotationally integral with a body of the valve and provided with internal annular toothing (41) coaxial with the sun gear (111);
      -- a plurality of planet gears (310) mounted on the planet carrier (200) and arranged to rotate about a respective axis parallel to the axis of the sun gear (111) and mesh with said sun gear (111) and with the internal annular toothing of the crown wheel;

        so that by rotationally operating the control knob (100) the rotational movement of the sun gear (111) is transmitted to the planet carrier (200) and therefore to the valve shaft;
        **characterized in that** it comprises a mechanism for reversibly locking the rotation of the control knob (100), comprising:

          - first locking means (141) rotationally integral with the control knob (100) and designed to cooperate with
          - second complementary locking means (411) arranged on the crown wheel (400) of the epicyclic mechanism;

        the control knob (100) being movable between at least a first operating position in which the first locking means (141) engage with the second complementary locking means (441) so as to lock rotation of the control knob (100) about the longitudinal axis, and at least a second operating position, in which the first locking means (141) are disengaged from the second locking means allowing rotation of the control knob (100); and **in that** the first locking means comprise an internal annular toothing (141) of an annular body (140) integral with the control knob (100) and the second locking means comprise an annular toothing (441) on an outer surface of the crown wheel (400).

2.  Epicyclic handwheel according to Claim 1, wherein the planet carrier (200) comprises a support (210) which has a plurality of pins (211), which are preferably hollow, each extending parallel to the longitudinal axis (X-X) towards the control knob (100).

3.  Epicyclic handwheel according to Claim 2 wherein each pin (211) is designed to support and act as a rotational pivot for a respective planet gear (310) coaxially mounted on the respective pin (211) and wherein the handwheel preferably comprises at least two, preferably three, planet gears (310).

4.  Epicyclic handwheel according to claim 2 or 3, wherein the support (210) comprises a coaxial sleeve (212) extending longitudinally from a rear side thereof; the sleeve (212) being configured for engagement with the shaft of the valve and/or having dimensions suitable for coaxial insertion inside a corresponding hole (412) of the crown wheel (400).

5.  Epicyclic handwheel according to one of the preceding claims, wherein the planet carrier (200) comprises a cover (220) axially arranged between the planet gears (310) and the control knob (100) and configured to limit, in particular lock, the longitudinal position of each planet gear (310), leaving it free to rotate, wherein preferably the cover (220) comprises an annular disc (225) arranged between the support (210) and the control knob (100) so as to limit, in particular lock, the longitudinal axial position of the planet gears (310), leaving them free to rotate on the respective pin (211).

6.  Epicyclic handwheel according to the preceding claim, wherein the annular disc (225) of the cover comprises a central hole (2125b) coaxial with the sun gear (111) and a plurality of through-holes (225a) or sleeves (1225a), each coaxial with a respective pin (211) of the support (210).

7.  Epicyclic handwheel according to Claims 2-6, wherein the support (210) has a plurality of projecting shoulders (215) extending in the longitudinal direction from a front face of the suppor; and/or wherein the cover, in particular the cover disc (225), has shoulders (225c) projecting in the longitudinal direction from its rear surface.

8. Epicyclic handwheel according the preceding Claim, wherein the projecting shoulders (215) of the support and/or the projecting shoulders (225c) of the cover have a substantially triangular or trapezoidal form.

9. Epicyclic handwheel according to one of Claims 5-8, wherein the cover, in particular the cover disc (225), has an outer annular edge formed as an asymmetrical structure (225d), preferably a circle arc, with a predefined circumferential extension, suitable for cooperating with a corresponding seat (415d) in an inner circumferential surface of the crown wheel (400), the asymmetrical edge structure (225d) and the seat (415d) being dimensioned and configured to limit the rotation of the planet carrier (200) with respect to the crown wheel (400) within a certain predefined range of rotation.

10. Epicyclic handwheel according to one of the preceding claims, wherein the control knob (100) is movable axially in the longitudinal direction (X-X) with respect to the crown wheel (400) between said first locking operating position and said at least one second operating position.

11. Epicyclic handwheel according to the preceding claim, wherein one or more thrust springs (241) are arranged between the crown wheel (400) and the control knob (100) and are designed to keep the control knob at a predefined distance from the crown wheel (400) corresponding to the first operating position.

12. Epicyclic handwheel according to the preceding claim, wherein each spring (241) is coaxially inserted inside a respective pin (211) of a support of the planet carrier (200).

13. Handwheel according to one of the preceding claims, comprising an annular plate (221) arranged between the planet gears (310) and the control knob (100) and rotationally integral with the planet carrier.

14. Handwheel according to the preceding claim, wherein the annular plate (221) is provided with: a hole (221b) coaxial with the sun gear (111) and with dimensions such as to allow said sun gear (111) to pass through; and a plurality of pins (221a) projecting from a rear surface of the annular plate (221), each suitable for coaxial insertion inside a respective pin (211) of the support (210) for engagement of the annular plate with the support (210), so that the plate is partially free to be displaced in an axial direction (X-X) with respect to the support (210) against the thrusting action of one or more springs (241).

15. Handwheel according to the preceding claim, wherein the pins (221a) of the annular plate (221) are coaxially inserted inside a respective spring (241) and inside a respective pin (211) of the support so that each pin of the annular plate (221) guides the respective spring (241) and the plate (221) provides a reaction surface for the springs (241) so that the springs push the plate (221) towards the control knob (100) in the longitudinal direction (X-X).

16. Epicyclic handwheel according to one of the preceding Claims 13-15, **characterized in that** the annular plate (221) has on its front surface (221a) adjacent to the inner surface (110b) of the control knob (100) an indication of the value of at least one operating parameter ($\alpha$; Kv) of the valve and **in that** the control knob has at least one window (130;132) on its front surface (110a) which allows viewing of the operating parameter ($\alpha$; Kv) indicated on the annular plate (221), the at least one parameter ($\alpha$; Kv) being, in particular, a parameter dependent on a degree of rotation of a closing element operated by the valve shaft.

17. Handwheel according to one Claim 16, wherein the indication comprises at least one graduated scale distributed over a suitable angular extension of the annular plate (221) and comprising a plurality of values of the operating parameter ($\alpha$; Kv); and/or wherein the at least operating parameter ($\alpha$; Kv) preferably comprises an opening angle ($\alpha$) of the valve and/or a hydraulic conductivity (Kv) of the valve.

18. Handwheel according to the preceding claim, wherein the indication comprises: a plurality of graduated scales arranged concentric or in diametrically opposite positions on the annular plate (221); and/or a plurality of graduated scales indicating different values of at least one some parameter, in particular the hydraulic conductivity, which is variable depending on the type and/or size of the valve.

19. Handwheel according to one of the preceding Claims 16-18, **characterized in that** it comprises: at least one window (130) with dimensions such as to allow simultaneous viewing of an indication of a first operating parameter ($\alpha$) and at least one further operating parameter (Kv); and/or at least one further window (132) for allowing the viewing of and indication of at least one further parameter (Kv).

20. Handwheel according to one of Claims 16 to 19, comprising an element (140) for partially covering a window (130;132) of the control knob (100), which may be stably and reversibly connected to the control knob (100).

21. Method for the production of a handwheel according to one of the preceding claims, comprising the steps of:

- providing a control knob (100) with an inner surface and an outer surface situated opposite each other with respect to a longitudinal axis (X-X), the control knob (100) being able to be rotationally operated about a longitudinal axis and provided with a sun gear (111) extending along the longitudinal axis (X-X) rotationally integral with the inner surface of the control knob (100);
- coaxially assembling the control knob (100) together with:

-- a planet carrier (200) configured to be rotationally locked to a shaft of a valve and carrying a plurality of planet gears, each designed to rotate about a respective axis parallel to the axis of the sun gear (111), so that the sun gear (111) meshes with each planet gear; and with

-- a coaxial crown wheel (400) configured to be rotationally locked to a body of the valve and provided with internal annular teeth coaxial with the sun gear (111), so that each planet gear meshes with the internal teeth of the crown wheel (400);

thereby obtaining an epicyclic mechanism for transmission of a rotational movement such that by rotationally operating the control knob (100) the rotational movement of the sun gear (111) is transmitted to the planet carrier (200) and therefore, during use, to the valve shaft.

22. Valve unit comprising:

- a valve with a valve body which defines a passage for a fluid, and an element for closing the fluid passage, which may be rotated about its axis by means of an actuating shaft so as to cause opening/closing of the fluid passage;
- an epicyclic handwheel according to one of Claims 1-20,
wherein the planet carrier (200) is rotationally integral with the actuating shaft and the crown wheel (400) is rotationally integral with the valve body.

**Patentansprüche**

1. Epizyklisches Handrad für ein Ventil, insbesondere Vierteldrehungsventil, umfassend:

- einen Steuerknopf (100) mit einer Innenfläche (110b) und einer Außenfläche (110a), die einander in Bezug auf eine Längsachse (X-X) gegenüberliegen, wobei der Steuerknopf (100) um eine Längsachse drehbar betätigbar ist;
- einen epizyklischen Mechanismus zur Übertragung einer Drehbewegung, umfassend:

- ein Sonnenrad (111), das sich entlang der Längsachse (X-X) erstreckt und drehfest mit der Innenfläche des Steuerknopfs (100) ist;
- einen Planetenträger (200), der dazu eingerichtet ist, drehfest mit einer Welle des Ventils gemacht zu werden;
- ein Kronenrad (400), das dazu eingerichtet ist drehfest mit einem Körper des Ventils zu sein und mit einer inneren ringförmigen Verzahnung (41) versehen ist, die koaxial mit dem Sonnenrad (111) ist;
- eine Vielzahl von Planetenrädern (310), die auf dem Planetenträger (200) montiert sind und so angeordnet sind, dass sie um eine entsprechende Achse parallel zu der Achse des Sonnenrads (111) rotieren und mit dem Sonnenrad (111) und mit der inneren ringförmigen Verzahnung des Kronenrads kämmen;

so dass durch eine Drehbetätigung des Steuerknopfs (100) die Drehbewegung des Sonnenrads (111) auf den Planetenträger (200) und dadurch auf die Ventilwelle übertragen wird;
**dadurch gekennzeichnet, dass** es einen Mechanismus zur reversiblen Verriegelung der Drehung des Steuerknopfes (100) umfasst, umfassend:

- erste Verriegelungsmittel (141), die drehfest mit dem Steuerknopf (100) sind und dazu ausgebildet sind zu kooperieren mit
- zweiten komplementären Verriegelungsmitteln (411), die auf dem Kronenrad (400) des epizyklischen Mechanismus angeordnet sind;

wobei der Steuerknopf (100) zwischen wenigstens einer Betriebsposition, in der die ersten Verriegelungsmittel (141) mit den zweiten komplementären Verriegelungsmitteln (441) in Eingriff stehen, um die Drehung des Steuerknopfs (100) um die Längsachse zu blockieren, und wenigstens einer zweiten Betriebsposition, in der die ersten Verriegelungsmittel (141) von den zweiten Verriegelungsmitteln gelöst sind und eine Drehung des Steuerknopfs (100) erlauben, bewegbar ist;
und dadurch dass die ersten Verriegelungsmittel eine innere ringförmige Verzahnung (141) eines ringförmigen Körpers (140) umfassen, der einstückig mit dem Steuerknopf (100) ist, und die zweiten Verriegelungsmittel eine ringförmige Verzahnung (441) an einer Außenfläche des Kronenrads (400) umfassen.

2. Epizyklisches Handrad nach Anspruch 1, wobei der Planetenträger (200) einen Träger (210) umfasst, der mehrere Stifte (211), die vorzugsweise hohl sind, aufweist, die sich jeweils parallel zur Längsachse (X-X) zum Drehknopf (100) erstrecken.

3. Epizyklisches Handrad nach Anspruch 2, wobei jeder Stift (211) dazu ausgebildet ist, ein entsprechendes Planetenrad (310), das koaxial auf dem entsprechenden Stift (211) montiert ist, zu tragen und als Drehachse zu dienen und wobei das Handrad vorzugsweise wenigstens zwei, vorzugsweise drei, Planetenräder (310) umfasst.

4. Epizyklisches Handrad nach Anspruch 2 oder 3, wobei der Träger (210) eine koaxiale Hülse (212) umfasst, die sich in Längsrichtung von einer Rückseite desselben erstreckt; wobei die Hülse (212) für einen Eingriff mit der Welle des Ventils eingerichtet ist und/oder Abmessungen aufweist, die für ein koaxiales Einsetzen innerhalb eines entsprechenden Lochs (412) des Kronenrads (400) geeignet sind.

5. Epizyklisches Handrad nach einem der vorhergehenden Ansprüche, wobei der Planetenträger (200) eine Abdeckung (220) aufweist, die axial zwischen den Planetenrädern (310) und dem Steuerknopf (100) angeordnet ist und dazu eingerichtet ist, die Längsposition jedes Planetenrads (310) zu begrenzen, insbesondere zu sperren, und es frei dreh zu lassen, wobei vorzugsweise die Abdeckung (220) eine zwischen dem Träger (210) und dem Steuerknopf (100) angeordnete ringförmige Scheibe (225) aufweist, um die Axialposition in Längsrichtung der Planetenräder (310) zu begrenzen, insbesondere zu sperren, und sie frei auf dem jeweiligen Stift (211) drehen zu lassen.

6. Epizyklisches Handrad nach dem vorhergehenden Anspruch, wobei die ringförmige Scheibe (225) der Abdeckung ein zentrales Loch (2125b) koaxial zum Sonnenrad (111) und eine Vielzahl von Durchgangslöchern (225a) oder Hülsen (1225a) umfasst, die jeweils koaxial zu einem entsprechenden Stift (211) des Trägers (210) sind.

7. Epizyklisches Handrad nach den Ansprüchen 2 bis 6, wobei der Träger (210) eine Vielzahl von sich in Längsrichtung von einer Vorderseite des Trägers erstreckende vorstehende Schultern (215) aufweist; und/oder wobei die Abdeckung, insbesondere die Abdeckscheibe (225), von ihrer Rückseite in Längsrichtung vorstehende Schultern (225c) aufweist.

8. Epizyklisches Handrad nach dem vorhergehenden Anspruch, wobei vorstehenden Schultern (215) des Trägers und/oder die vorstehenden Schultern (225c) der Abdeckung eine im Wesentlichen dreieckige oder trapezförmige Form aufweisen.

9. Epizyklisches Handrad nach einem der Ansprüche 5 bis 8, wobei die Abdeckung, insbesondere die Abdeckscheibe (225), einen äußeren Ringrand aufweist, der als asymmetrische Struktur (225d), vorzugsweise als Kreisbogen, mit einer vordefinierten Umfangserstreckung ausgebildet ist, die geeignet ist, mit einem entsprechenden Sitz (415d) in einer inneren Umfangsfläche des Kronenrads (400) zusammenzuwirken, wobei die asymmetrische Randstruktur (225d) und der Sitz (415d) dimensioniert und konfiguriert sind, die Drehung des Planetenträgers (200) in Bezug auf das Kronenrad (400) innerhalb eines bestimmten vordefinierten Drehbereichs zu begrenzen.

10. Epizyklisches Handrad nach einem der vorhergehenden Ansprüche, wobei der Steuerknopf (100) axial in Längsrichtung (X-X) in Bezug auf das Kronenrad (400) zwischen der ersten verriegelnden Betriebsposition und der wenigstens einen zweiten Betriebsposition bewegbar ist.

11. Epizyklisches Handrad nach dem vorhergehenden Anspruch, wobei eine oder mehrere Druckfedern (241) zwischen dem Kronenrad (400) und dem Steuerknopf (100) angeordnet sind und dazu ausgebildet sind, den Steuerknopf in einem vordefinierten Abstand von dem Kronenrad zu halten (400), der der ersten Betriebsposition entspricht.

12. Epizyklisches Handrad nach dem vorhergehenden Anspruch, wobei jede Feder (241) koaxial in einen entsprechenden Stift (211) eines Trägers des Planetenträgers (200) eingesetzt ist.

13. Handrad nach einem der vorhergehenden Ansprüche, umfassend eine ringförmige Platte (221), die zwischen den Planetenrädern (310) und dem Steuerknopf (100) angeordnet ist und drehfest mit dem Planetenträger ist.

14. Handrad nach dem vorhergehenden Anspruch, wobei die ringförmige Platte (221) ausgestattet ist mit: einem Loch (221b), das koaxial mit dem Sonnenrad (111) ist und mit Dimensionen, so dass das Sonnenrad (111) hindurchtreten kann; und einer Vielzahl von Stiften (221a), die von einer Rückseite der ringförmigen Platte (221) vorstehen, die jeweils zum koaxialen Einsetzen in einen entsprechenden Stift (211) des Trägers (210) geeignet sind, für einen Eingriff der ringförmigen Platte mit dem Träger (210), so dass die Platte teilweise frei ist, in einer Axialrichtung (X-X) in Bezug auf den Träger (210) gegen die Druckwirkung einer oder mehrerer Federn (241) verschoben zu werden.

15. Handrad nach dem vorhergehenden Anspruch, wobei die Stifte (221a) der ringförmigen Platte (221) koaxial in eine entsprechende Feder (241) und in einen entsprechenden Stift (211) des Trägers eingesetzt sind, so dass jeder Stift der ringförmigen Platte (221) die entsprechende Feder (241) führt und die Platte (221) eine Reaktionsfläche für die Federn (241) bereitstellt, so dass die Federn die Platte (221) in Längsrichtung (x-) in Richtung des Steuerknopfs (100) drücken.

16. Epizyklisches Handrad nach einem der vorhergehenden Ansprüche 13 bis 15, **dadurch gekennzeichnet, dass** die ringförmige Platte (221) auf ihrer Vorderseite (221a) angrenzend an die Innenfläche (110b) des Steuerknopfs (100) eine Anzeige des Werts mindestens eines Betriebsparameters (a; Kv) des Ventils aufweist und dadurch, dass der Steuerknopf wenigstens ein Fenster (130;132) an seiner Vorderseite (110a) aufweist, das die Sicht auf den auf der ringförmigen Platte (221) angezeigten Betriebsparameter (a; Kv) ermöglicht, wobei der wenigstens eine Parameter (a; Kv) insbesondere ein Parameter ist, der abhängig von einem Drehgrad eines durch die Ventilwelle betätigten Schließelements ist.

17. Handrad nach Anspruch 16, wobei die Anzeige mindestens eine abgestufte Skala umfasst, die über eine geeignete Winkelausdehnung der ringförmigen Platte (221) verteilt ist und eine Vielzahl von Werten des Betriebsparameters (a; Kv) umfasst; und/oder wobei der wenigstens eine Betriebsparameter (a; Kv) vorzugsweise einen Öffnungswinkel (a) des Ventils und/oder eine hydraulische Leitfähigkeit (Kv) des Ventils umfasst.

18. Handrad nach dem vorhergehenden Anspruch, wobei die Anzeige umfasst: eine Vielzahl von abgestuften Skalen, die konzentrisch oder in diametral gegenüberliegenden Positionen der ringförmigen Platte (221) angeordnet sind; und/oder eine Vielzahl von abgestuften Skalen, die verschiedene Werte wenigstens eines Parameters anzeigen, insbesondere der hydraulischen Leitfähigkeit, anzeigen, der abhängig vom Typ und/oder der Größe des Ventils variabel ist.

19. Handrad nach einem der vorhergehenden Ansprüche 16-18, **dadurch gekennzeichnet, dass** es umfasst: wenigstens ein Fenster (130) mit Dimensionen, so dass es eine gleichzeitige Betrachtung einer Anzeige eines ersten Betriebsparameters (a) und wenigstens eines weiteren Betriebsparameters (Kv) erlaubt; und/oder wenigstens ein weiteres Fenster (132), das die Betrachtung und Anzeige wenigstens eines weiteren Parameters (Kv) erlaubt.

20. Handrad nach einem der Ansprüche 16 bis 19, umfassend ein Element (140) zum teilweisen Abdecken eines Fensters (130;132) des Steuerknopfs (100), das fest und reversibel mit dem Steuerknopf (100) verbunden sein kann.

21. Verfahren zum Herstellen eines Handrads nach einem der vorhergehenden Ansprüche, umfassend die Schritte:

- Bereitstellen eines Steuerknopfs (100) mit einer Innenfläche und einer Außenfläche, die einander in Bezug auf eine Längsachse (X-X) gegenüberliegen, wobei der Steuerknopf (100) um eine Längsachse drehbar betätigbar ist und mit einem Sonnenrad (111) versehen ist, das sich entlang der Längsachse (X-X) erstreckt und drehfest mit der Innenfläche des Steuerknopfs (100) ist;
- koaxiales Zusammenbauen des Steuerknopfs (100) mit:

- einem Planetenträger (200), der dazu eingerichtet ist, drehfest mit einer Welle eines Ventils verbunden zu werden und eine Vielzahl von Planetenrädern trägt, die jeweils dazu ausgebildet sind, um eine entsprechende Achse parallel zur Achse des Sonnenrads (111) zu drehen, so dass das Sonnenrad (111) mit jedem Planetenrad in Eingriff steht; und mit
- einem koaxialen Kronenrad (400), das dazu eingerichtet ist, drehfest mit einem Körper des Ventils verbunden zu werden und mit inneren ringförmigen Zähnen koaxial zum Sonnenrad (111) ausgestattet ist, so dass jedes Planetenrad mit den inneren Zähnen des Kronenrads (400) in Eingriff steht;

wodurch ein epizyklischer Mechanismus zur Übertragung einer Drehbewegung erhalten wird, so dass durch eine Drehbetätigung des Steuerknopfs (100) die Drehbewegung des Sonnenrads (111) auf den Planetenträger (200), und dadurch, im Gebrauch, auf die Ventilwelle übertragen wird.

22. Ventileinheit umfassend:

- Ein Ventil mit einem Ventilkörper, der einen Durchgang für ein Fluid definiert, und einem Element zum Schließen des Fluiddurchgangs, das mittels einer Betätigungswelle um seine Achse gedreht werden kann, um ein Öffnen/Schließen des Fluiddurchgangs zu bewirken;

- Ein epizyklisches Handrad nach einem der Ansprüche 1-20, wobei der Planetenträger (200) drehfest mit der Betätigungswelle ist und das Kronenrad (400) drehfest mit dem Ventilkörper ist.

## Revendications

1. Volant épicycloïdal pour une vanne, en particulier une vanne quart de tour, comprenant :

   - un bouton de commande (100) présentant une surface intérieure (110b) et une surface extérieure (110a) situées à l'opposé l'une de l'autre par rapport à un axe longitudinal (X-X), le bouton de commande (100) pouvant être actionné en rotation autour de l'axe longitudinal ;
   - un mécanisme épicycloïdal de transmission d'un mouvement de rotation, comprenant :

     -- un planétaire (111) s'étendant le long de l'axe longitudinal (X-X) et solidaire en rotation de la surface intérieure du bouton de commande (100) ;
     -- un porte-satellites (200) configuré pour être solidaire en rotation d'un arbre de la vanne ;
     -- une couronne (400) configurée pour être solidaire en rotation d'un corps de la vanne et pourvue d'une denture annulaire interne (41) coaxiale avec le planétaire (111) ;
     -- une pluralité de satellites (310) montés sur le porte-satellites (200) et disposés pour tourner autour d'un axe respectif parallèle à l'axe du planétaire (111) et s'engrener avec ledit planétaire (111) et avec la denture annulaire interne de la couronne ;

     de sorte qu'en actionnant en rotation le bouton de commande (100), le mouvement de rotation du planétaire (111) est transmis au porte-satellites (200) et donc à l'arbre de vanne ;
     **caractérisé en ce qu'**il comprend un mécanisme de blocage réversible de la rotation du bouton de commande (100), comprenant :

       - des premiers moyens de blocage (141) solidaires en rotation du bouton de commande (100) et conçus pour coopérer avec
       - des seconds moyens de blocage complémentaires (411) disposés sur la couronne (400) du mécanisme épicycloïdal ;

   le bouton de commande (100) étant mobile entre au moins une première position de fonctionnement dans laquelle les premiers moyens de blocage (141) s'engagent avec les seconds moyens de blocage complémentaires (441) de façon à bloquer la rotation du bouton de commande (100) autour de l'axe longitudinal, et au moins une seconde position de fonctionnement, dans laquelle les premiers moyens de blocage (141) sont désengagés des seconds moyens de blocage, permettant la rotation du bouton de commande (100) ;
   et **en ce que** les premiers moyens de blocage comprennent une denture annulaire interne (141) d'un corps annulaire (140) solidaire du bouton de commande (100) et les seconds moyens de blocage comprennent une denture annulaire (441) sur une surface extérieure de la couronne (400).

2. Volant épicycloïdal selon la revendication 1, dans lequel le porte-satellites (200) comprend un support (210) qui présente une pluralité de tiges (211), qui sont préférentiellement creuses, s'étendant chacune parallèlement à l'axe longitudinal (X-X) vers le bouton de commande (100).

3. Volant épicycloïdal selon la revendication 2, dans lequel chaque tige (211) est conçue pour supporter et agir comme un pivot de rotation pour un satellite (310) respectif monté coaxialement sur la tige (211) respective et dans lequel le volant comprend préférentiellement au moins deux, préférentiellement trois, satellites (310).

4. Volant épicycloïdal selon la revendication 2 ou 3, dans lequel le support (210) comprend un manchon coaxial (212) s'étendant longitudinalement à partir d'un côté arrière de celui-ci ; le manchon (212) étant configuré pour un engagement avec l'arbre de la vanne et/ou ayant des dimensions convenables pour une insertion coaxiale à l'intérieur d'un trou correspondant (412) de la couronne (400).

5. Volant épicycloïdal selon l'une des revendications précédentes, dans lequel le porte-satellites (200) comprend un couvercle (220) disposé axialement entre les satellites (310) et le bouton de commande (100) et configuré pour limiter, en particulier bloquer, la position longitudinale de chaque satellite (310), en le laissant libre de tourner, dans lequel préférentiellement le couvercle (220) comprend un disque annulaire (225) disposé entre le support (210) et le bouton de commande (100) de façon à limiter, en particulier bloquer, la position axiale longitudinale des satellites (310), en les laissant libres de tourner sur la tige (211) respective.

6. Volant épicycloïdal selon la revendication précédente, dans lequel le disque annulaire (225) du couvercle comprend un trou central (2125b) coaxial avec le planétaire (111) et une pluralité de trous traversants (225a) ou manchons (1225a), chacun coaxial avec une tige (211) respective du support (210).

7. Volant épicycloïdal selon les revendications 2 à 6, dans lequel le support (210) présente une pluralité d'épaulements en saillie (215) s'étendant dans la direction longitudinale à partir d'une face avant du support ; et/ou dans lequel le couvercle, en particulier le disque de couvercle (225), présente des épaulements (225c) faisant saillie dans la direction longitudinale à partir de sa surface arrière.

8. Volant épicycloïdal selon la revendication précédente, dans lequel les épaulements en saillie (215) du support et/ou les épaulements en saillie (225c) du couvercle ont une forme sensiblement triangulaire ou trapézoïdale.

9. Volant épicycloïdal selon l'une des revendications 5 à 8, dans lequel le couvercle, en particulier le disque de couvercle (225), présente un bord annulaire extérieur formé comme une structure asymétrique (225d), préférentiellement en arc de cercle, avec une extension circonférentielle prédéfinie, convenant pour coopérer avec un siège correspondant (415d) dans une surface circonférentielle intérieure de la couronne (400), la structure de bord asymétrique (225d) et le siège (415d) étant dimensionnés et configurés pour limiter la rotation du porte-satellites (200) par rapport à la couronne (400) à l'intérieur d'une certaine plage de rotation prédéfinie.

10. Volant épicycloïdal selon l'une des revendications précédentes, dans lequel le bouton de commande (100) est mobile axialement dans la direction longitudinale (X-X) par rapport à la couronne (400) entre ladite première position de fonctionnement de blocage et ladite au moins une seconde position de fonctionnement.

11. Volant épicycloïdal selon la revendication précédente, dans lequel un ou plusieurs ressorts de poussée (241) sont disposés entre la couronne (400) et le bouton de commande (100) et sont conçus pour maintenir le bouton de commande à une distance prédéfinie de la couronne (400) correspondant à la première position de fonctionnement.

12. Volant épicycloïdal selon la revendication précédente, dans lequel chaque ressort (241) est inséré coaxialement à l'intérieur d'une tige (211) respective d'un support du porte-satellites (200).

13. Volant selon l'une des revendications précédentes, comprenant un plateau annulaire (221) disposé entre les satellites (310) et le bouton de commande (100) et solidaire en rotation du porte-satellites.

14. Volant selon la revendication précédente, dans lequel le plateau annulaire (221) est pourvu : d'un trou (221b) coaxial avec le planétaire (111) et dont les dimensions sont telles qu'elles permettent le passage dudit planétaire (111) ; et d'une pluralité de tiges (221a) faisant saillie à partir d'une surface arrière du plateau annulaire (221), chacune convenant pour une insertion coaxiale à l'intérieur d'une tige (211) respective du support (210) pour un engagement du plateau annulaire avec le support (210), de sorte que le plateau est partiellement libre d'être déplacé dans une direction axiale (X-X) par rapport au support (210) contre l'action de poussée d'un ou de plusieurs ressorts (241).

15. Volant selon la revendication précédente, dans lequel les tiges (221a) du plateau annulaire (221) sont insérées coaxialement à l'intérieur d'un ressort (241) respectif et à l'intérieur d'une tige (211) respective du support, de sorte que chaque tige du plateau annulaire (221) guide le ressort (241) respectif et que le plateau (221) constitue une surface de réaction pour les ressorts (241), de sorte que les ressorts poussent le plateau (221) vers le bouton de commande (100) dans la direction longitudinale (X-X).

16. Volant épicycloïdal selon l'une des revendications 13 à 15 précédentes, **caractérisé en ce que** le plateau annulaire (221) présente sur sa surface avant (221a) adjacente à la surface intérieure (110b) du bouton de commande (100) une indication de la valeur d'au moins un paramètre de fonctionnement ($\alpha$ ; Kv) de la vanne et **en ce que** le bouton de commande présente au moins une fenêtre (130 ; 132) sur sa surface avant (110a) qui permet de visualiser le paramètre de fonctionnement ($\alpha$ ; Kv) indiqué sur le plateau annulaire (221), l'au moins un paramètre ($\alpha$ ; Kv) étant, en particulier, un paramètre dépendant d'un degré de rotation d'un élément de fermeture actionné par l'arbre de vanne.

17. Volant selon une revendication 16, dans lequel l'indication comprend au moins une échelle graduée répartie sur une extension angulaire convenable du plateau annulaire (221) et comprenant une pluralité de valeurs du paramètre de fonctionnement ($\alpha$ ; Kv) ; et/ou dans lequel l'au moins un paramètre de fonctionnement ($\alpha$ ; Kv) comprend préférentiellement un angle d'ouverture ($\alpha$) de la vanne et/ou une conductivité hydraulique (Kv) de la vanne.

**18.** Volant selon la revendication précédente, dans lequel l'indication comprend : une pluralité d'échelles graduées disposées de manière concentrique ou dans des positions diamétralement opposées sur le plateau annulaire (221) ; et/ou une pluralité d'échelles graduées indiquant différentes valeurs d'au moins un certain paramètre, en particulier la conductivité hydraulique, qui est variable en fonction du type et/ou de la taille de la vanne.

**19.** Volant selon l'une des revendications 16 à 18 précédentes, **caractérisé en ce qu'**il comprend : au moins une fenêtre (130) dont les dimensions sont telles qu'elles permettent de visualiser simultanément une indication d'un premier paramètre de fonctionnement (α) et au moins un autre paramètre de fonctionnement (Kv) ; et/ou au moins une autre fenêtre (132) pour permettre la visualisation et l'indication d'au moins un autre paramètre (Kv).

**20.** Volant selon l'une des revendications 16 à 19, comprenant un élément (140) pour recouvrir partiellement une fenêtre (130 ; 132) du bouton de commande (100), qui peut être relié de manière stable et réversible au bouton de commande (100).

**21.** Procédé de production d'un volant selon l'une des revendications précédentes, comprenant les étapes de :

- fourniture d'un bouton de commande (100) présentant une surface intérieure et une surface extérieure situées à l'opposé l'une de l'autre par rapport à un axe longitudinal (X-X), le bouton de commande (100) étant apte à être actionné en rotation autour d'un axe longitudinal et pourvu d'un planétaire (111) s'étendant le long de l'axe longitudinal (X-X) solidaire en rotation de la surface intérieure du bouton de commande (100) ;
- assemblage coaxial du bouton de commande (100) conjointement avec :

-- un porte-satellites (200) configuré pour être bloqué en rotation sur un arbre d'une vanne et portant une pluralité de satellites, chacun conçu pour tourner autour d'un axe respectif parallèle à l'axe du planétaire (111), de sorte que le planétaire (111) s'engrène avec chaque satellite ; et avec
-- une couronne coaxiale (400) configurée pour être bloquée en rotation sur un corps de la vanne et pourvue de dents annulaires internes coaxiales avec le planétaire (111), de sorte que chaque satellite s'engrène avec les dents internes de la couronne (400) ;

obtenant ainsi un mécanisme épicycloïdal de transmission d'un mouvement de rotation de telle sorte que, en actionnant en rotation le bouton de commande (100), le mouvement de rotation du planétaire (111) est transmis au porte-satellites (200) et donc, en cours d'utilisation, à l'arbre de vanne.

**22.** Unité de vanne comprenant :

- une vanne avec un corps de vanne qui définit un passage pour un fluide, et un élément de fermeture du passage de fluide, qui peut être mis en rotation autour de son axe au moyen d'un arbre d'actionnement de façon à entraîner l'ouverture/la fermeture du passage de fluide ;
- un volant épicycloïdal selon l'une des revendications 1 à 20,
dans lequel le porte-satellites (200) est solidaire en rotation de l'arbre d'actionnement et la couronne (400) est solidaire en rotation du corps de vanne.

FIG.1

FIG.2

FIG.3

FIG.4

FIG.5

FIG.6

FIG.7

FIG.8

FIG.9

FIG.10

FIG.11

FIG.12

FIG.13

FIG.14

FIG.15

FIG.16A

FIG.16B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3902731 A1